# EUROPEAN PATENT APPLICATION

(11) **EP 0 803 347 A1**
(43) Date of publication of application: **29.10.1997**
(21) Application number: 97106571.9
(22) Date of filing: 17.04.1997
(51) Int. Cl.: B32B 27/08, B32B 1/08, F16L 11/08, B29C 53/56

(54) **Use of cross-linked polyethylene and uhmw polyethylene in a sandwich patern to form a composite liner to improve the chemical resistance and flexibility properties**

(30) Priority: 26.04.1996 US 637983
(71) Applicant: THE GOODYEAR TIRE & RUBBER COMPANY, Akron, Ohio 44316-0001 (US)
(72) Inventor: Cook, Andre George, Granby, Quebec J2H 1V6 (CA)
(74) Representative: Leitz, Paul

(57) **Abstract**

A sandwich of a series of alternating layers **(25,26)** of ultra high molecular weight polyethylene and cross-linked polyethylene have been found to offer much greater resistance to permeation than the same thickness of a mixture of ultra high molecular weight polyethylene and cross-linked polyethylene as well as improved bending crack resistance when measured in aromatic solvents or mineral acids, thus, affording a way to make improved hose and linings for tanks of wood or metal.

## Description

### Field of the Invention

A fabric coated with alternating series of layers of film of ultra high molecular weight polyethylene and cross-linked polyethylene, can be formed as a hose to give said hose, or as a lining, for tanks. Preferably, the hose is made by wrapping a cylindrical elongated core with alternating plies of ultra high molecular weight polyethylene and cross-linked polyethylene and more plies and then preferably covered with protective plies of rubberized fabric and/or steel wire.

### Summary of the Invention

This invention relates to an improved coating of films on fabric or metal having improved resistance to permeation of aromatics and mineral acids and resistance to bend cracking comprising a coating on fabric or metal coated alternately with ultra high molecular weight polyethylene and with cross-linked polyethylene and cured to fabric or metal. More particularly, this invention applies to a coated fabric fabricated as a tank liner or hose to handle chemicals such as aromatics, for example, benzene, toluene, and xylene or mineral acids such as sulfuric or hydrochloric where the coated fabric comprises a fabric adhered and cured to a tube made of a series of alternating coats of ultra high molecular weight polyethylene (UHMWPE) and relatively high cross-linked polyethylene (cross-linked PE). Amazingly, I have found that use of a tank liner or hose formed from a fabric adhered and a tube made of a cured to a series of alternating coats or layers of tape of UHMWPE and cross-linked PE gives as much as 40% improvement in resistance to permeation as well as much improved resistance to bend cracking relative to use of a fabric coated with only one of either UHMWPE or cross-linked PE. This improvement in resistance is amazing in view of the fact that it is known to coat fabric with these materials singularly.

This idea of building the tube on the mandrel or core in a sandwich construction to get these improved results is truly unexpected in view of the industry recognized results with a single coating material. These improved results may be attributable to the materially different crystallinity and molecular weight of the polyethylenes in the alternating layers but this is truly unexpected in view of the results achieved otherwise with the mixtures. Consequently, the adhesion of the coating to the fabric to the sandwich layers of UHMWPE and cross-linked PE is likewise improved to yield better crack resistance on bending. These sandwiches of layers of these specific films are excellent for a hose and can be readily fabricated. It permits a hollow hose tube of UHMWPE preferably as a tape of desired thickness to be helically wounded on core and then be covered with alternate layers of cross-linked PE and UHMWPE and ultimately be wrapped with a suitable hose fabric. Suitable hose fabrics are polyamide or polyester, for example, nylon, Kevlar® or the commercial polyester grade fabric may be used.

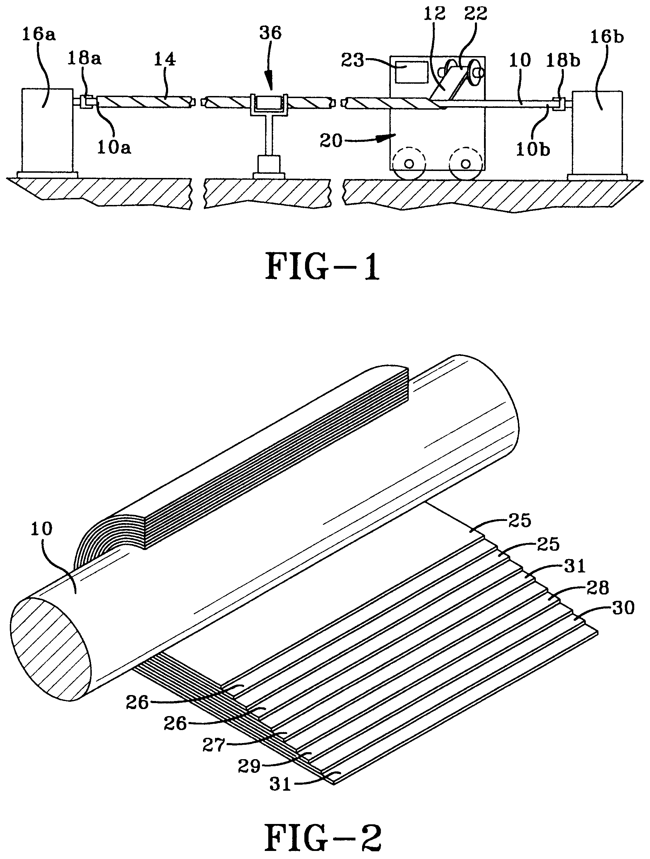

The nature of the invention and its advantages may be more readily seen and understood by reference to the drawings where Figure 1 shows a schematic side view of the wrapping equipment with various interruptions of the core and base necessary for dimensions of the equipment and Figure 2 shows hose split end spread out with its components exposed to show the layers in greater detail. Reference is again to the drawings shows a core 10. This core generally is metallic and for the larger diameter hose, it is preferred that the core be of type that can collapse and re-extend to facilitate removing the hose from the core. The core ends 10a, 10b rest and fit in the mandrels 18a and 18b operative in head bases 16a and 16b. Head base 16a has a motor (not shown) to control rotation of the core. Generally, it is desirable to treat the core with a release agent to facilitate removal of the hose from the core, usually with an air lance.

A trolley 20 is located to move back and forth parallel with the core along a track (not shown) to allow the tape 12 to be wrapped around the core as the core revolves and the trolley moves along the core to core end. The tape is held by bobbin 22 so it can unwind by the pull of the core as the tape is wound thereon. The trolley 20 has a control box 23 for controlling rotation of the core and back and forth movements of the trolley in cooperation with the motor. The nature of the apparatus described above is shown in a better outline in **US-A-4 856 720** for hose making. Generally a support 36 facilitating the rotation of the hose is used as shown in Figure 1.

Alternately, for short runs, the trolley may not be used as the workman can hold the bobbin and follow the tape along the core as it is wound thereon.

The tape first applied 25 to the core is a commercial tape of ultra high molecular weight polyethylene, such as is available in rolls under the trade name UNIC film. Then the next ply 26 is applied which is cross-linked polyethylene available commercially in tape rolls as X-PE. The tape on bobbin 22 may be replaced with a roll of cross-linked polyethylene viz X-PE tape. Then, the cross-linked polyethylene is applied over the first wrap of ultra high molecular weight polyethylene. Then a layer of the ultra high molecular weight polyethylene is applied over the cross-linked polyethylene. Usually at this time a breaker strip 27, preferably of open weave leno fabric, is applied to be followed by rubberized fabric 28 and rubberized wire wrap 29 and a rubberized greige fabric 30 or rubber 31 so it can withstand the hose wear on rough surfaces.

The films used in this construction are available commercially in various widths, 0.1 to 50 centimeters, and 0.004 to 0.250 mils thick. The film is available commercially as ultra high molecular weight polyethylene of molecular weight of 3.0 to 4.5 million units, i.e. UNIC film trade name. Likewise, the cross-linked polyethylene is available in commercial film of 0.1 to 50 centimeters of a molecular weight of 300,000 to 450,000 cross-linked density. The fabric wraps are available as tire or hose fabric grades also nylon fabric, polyaramide fabric and polyester fabric are used, for example. The first ply over the mandrel is the UNIC film (UHMWPE) which gives the best overall chemical resistance followed by the second ply X-PE.

A hose made as above using the designated first film followed by the preferred second film has a 40% or more percent improvement in permeation resistance relative to a hose made with layers of ultra high molecular weight polyethylene or those made using all cross-linked polyethylene barriers. Toluene is to be measured as penetrating solvent. This is true over the normal solvent temperature range, say 0°C to its boiling point.

While certain representative embodiments and details have been shown for the purpose of illustrating the invention, it will be apparent to those skilled in this art that various changes and modifications may be made therein without departing from the scope of the claims.

## Claims

1. An improved chemical resistant composite characterized by at least a layer of ultra high molecular weight polyethylene (UHMWPE) and a layer of cross-linked polyethylene adhered together.

2. The composite of claim 1 characterized by a series of layers of ultra high molecular weight polyethylene sandwiched in between each pair of layers of ultra high molecular weight polyethylene with a layer of cross-linked polyethylene.

3. The composite of claim 1 characterized in that each layer is fused together as a film.

4. The composite of claim 1 characterized in that the outer layer of polyethylene is adhered to a material selected from the class consisting of fabric, metal and wood.

5. The composite of claim 1 characterized in alternating layers of films respectively of ultra high molecular weight polyethylene and cross-linked polyethylene formed into the shape of a hose.

6. A method of fabricating a hose characterized by rotating a corresponding elongated cylindrical supported core by a driving means while wrapping said core with a polyethylene tape to build up the hose on said core, said hose being composed of an inner layer of ultra high molecular weight polyethylene tape followed by another layer of cross-linked polyethylene, continuing wrapping the core with alternating layers of ultra high molecular weight tape and cross-linked polyethylene tape until desired thickness of the tube is obtained and adhering the layers of tape together.

7. The composite of claim 1 characterized in that ultra high molecular weight polyethylene contains from 3.0 to 4.5 million units of weight and the cross-linked polyethylene has a molecular weight of 300,000 to 450,000 cross-linked density.
